(19) **Europäisches Patentamt**

**European Patent Office**

**Office européen des brevets**

(11) **EP 1 211 033 B1**

(12) **EUROPEAN PATENT SPECIFICATION**

(45) Date of publication and mention
of the grant of the patent:
**17.05.2006 Bulletin 2006/20**

(51) Int Cl.:
**B27K 5/02** (2006.01)

(21) Application number: **01128837.0**

(22) Date of filing: **04.12.2001**

(54) **Treatment method for wooden material**

Verfahren zur Behandlung von Holzwerkstoff

Procédé de traitement des materiaux en bois

(84) Designated Contracting States:
**DE GB IT**

(30) Priority: **04.12.2000 JP 2000369021**

(43) Date of publication of application:
**05.06.2002 Bulletin 2002/23**

(73) Proprietor: **YAMAHA CORPORATION**
**Hamamatsu-shi,**
**Shizuoka-ken 430-8650 (JP)**

(72) Inventors:
• **Yamamoto, Shigetaka**
**Hamamatsu-shi,**
**Shizuoka-ken (JP)**
• **Maruyama, Yoshihisa**
**Hamamatsu-shi,**
**Shizuoka-ken (JP)**

(74) Representative: **Geyer, Ulrich F. et al**
**WAGNER & GEYER,**
**Patentanwälte,**
**Gewürzmühlstrasse 5**
**80538 München (DE)**

(56) References cited:
• **DATABASE CA [Online] CHEMICAL ABSTRACTS SERVICE, COLUMBUS, OHIO, US; DAWSON, B.S.W. ET AL: "Chemical treatment and coating of Pinus radiata to inhibit photoyellowing" retrieved from STN Database accession no. 124: 179189 XP002283684 & SURFACE COATINGS AUSTRALIA , 32(10), 16-19, 22-5 CODEN: SCAUE6; ISSN: 0815-709X, 1995,**
• **DATABASE CA [Online] CHEMICAL ABSTRACTS SERVICE, COLUMBUS, OHIO, US; DAWSON, B. S. W. ET AL: "Chemical treatment and coating of Pinus radiata to inhibit photoyellowing" retrieved from STN Database accession no. 122:293649 XP002283685 & CHEMISTRY IN NEW ZEALAND , 58(5), 11-16, 18-19 CODEN: CMNZAA; ISSN: 0009-3076, 1994,**
• **DATABASE CA [Online] CHEMICAL ABSTRACTS SERVICE, COLUMBUS, OHIO, US; SAGIOKA, MASASHI ET AL: "Degradation of wood interior materials. 2. Bleaching and photochemical discoloration" retrieved from STN Database accession no. 88:75446 XP002283686 & MOKUZAI TO GIJUTSU , 31, 10-13 CODEN: MGIJD8; ISSN: 0286-2611, 1977,**
• **DATABASE WPI Section Ch, Week 197719 Derwent Publications Ltd., London, GB; Class E34, AN 1977-34076Y XP002283687 & SU 523 971 A (CELLULOSE PAPER IND RES), 29 September 1976 (1976-09-29)**

**Description**

BACKGROUND OF THE INVENTION

1. Field of the Invention

This invention relates to a treatment method for a wooden material, and specifically relates to a treatment method for a wooden material, comprising bleaching treatment followed by acetylating treatment.

2. Description of Related Art

It has been known to treat a wooden material with a hydrogen peroxide solution in order to remove stains from the wooden material or to decolorize the wooden material before dyeing or coating. For example, Japanese Unexamined Patent Application, First Publication No. Sho 55-140506 discloses a method of decolorizing a veneer with a hydrogen peroxide solution; Japanese Unexamined Patent Application, First Publication No. Sho 57-187204 discloses a method of treating a wooden material with aliphatic dialdehyde and chlorite; Japanese Unexamined Patent Application, First Publication No. Sho 62-134202 discloses a method of soaking a veneer made of oak in a mixed solution containing ascorbic acid, sodium hypochlorite, and sodium ethylenediaminetetraacetate; and Japanese Unexamined Patent Application, First Publication No. Hei 8-11106 discloses a method of bleaching and decolorizing a wooden material with a hydrogen peroxide solution including a hydrogen peroxide derivative such as sodium percarbonate or the like.

However, after the aforementioned conventional bleaching treatment, defects in which the color of the wooden material is deepened by exposure to light or heat tend to occur. This is because chromophores are generated from lignin in the wooden material having an aromatic structure or a phenol hydroxyl group by radical reactions which are caused by absorbing ultraviolet rays in sunlight and which induce photooxidation decomposing the lignin and decrease the molecular weight thereof or removing a hydrogen atom from the lignin. When the degree of the change of color of the bleached wooden material is indicated by the degree of color difference, the degree of color difference of the bleached wooden material is larger than that of a wooden material which is not bleached.

It has also been known to subject a wooden material to an acetylating treatment using an acetylating agent in order to improve resistance to humidity and to improve dimensional stability. For example, Japanese Unexamined Patent Application, First Publication No. Hei 5-269710 discloses an acetylating method in which wood fibers are acetylated in the vapor phase by using an acetylating agent such as acetic anhydride, and Japanese Unexamined Patent Application, First Publication No. Hei 7-9411 discloses an acetylating method in which a material including cellulose is acetylated in the vapor phase. Moreover, it is known that a wooden material may be bleached by an acetylating treatment. DATABASE CA Online CHEMICAL ABSTRACTS SERVICE, COLUMBUS, OHIO, US; SAGIOKA, MASASHI ET AL: "Degradation of wood interior materials. 2. Bleaching and photochemical discoloration" retrieved from STN Database accession no. 88:75446 XP002283686 & MOKUZAI TO GIJUTSU, 31, 10-13 CODEN: MGIJD8; ISSN: 0286-2611, 1977, discloses that Liberian larch wood was treated with bleaching agents to impart light resistance, and the effect of the bleaching agents on light resistance decreased in the order $H_2O_2$-$Ac_2O$ [108-24-7] > $NaClO_2$-AcOH [64-19-7]. The bleaching agents imparted good resistance to light having long wave lengths. More particularly, a bleaching treatment of wood is carried out using various bleaching agents such as a "$H_2O_2$ and $(CH_3CO)_2O$" type bleaching agent, and degrees of discoloration of the wood after the bleaching treatment caused by light-irradiation were evaluated. Mixtures which are obtained by mixing chemicals which have a bleaching action such as $H_2O_2$ and chemicals which have an acetylating action such as $(CH_3CO)_2O$ are used a bleaching chemicals. That is, a bleaching treatment and an acetylating treatment are conducted simultaneously in one step.

However, an acetylated wooden material has a problem in that the color of the wooden material is changed to a lighter color by exposure to light, and it is gradually decolorized to white.

Thus, the aforementioned conventional bleaching treatment and acetylating treatment of a wooden material have problems in that changes in color such as coloration (discoloration to deeper color) or fading (discoloration to lighter color) occurs after the treatment.

SUMMARY OF THE INVENTION

An object of the present invention is to provide a treatment method for a wooden material, which can significantly suppress the change of color of the wooden material, which is caused by exposure to light or heat after the treatment.

The treatment method for a wooden material includes steps of subjecting the wooden material to bleaching treatment and to acetylating treatment after the bleaching treatment, wherein the degree of acetylation of the wooden material subjected to the acetylating treatment is in the range of 1 to 25% by weight gain in the wooden material.

Moreover, the wooden material is preferably washed and is preferably dried between the bleaching treatment and the acetylating treatment.

The bleaching treatment may be carried out by immersing the wooden material into a bleaching solution and the acetylating treatment may be carried out until the degree of the acetylation becomes 5% or more by weight.

## DETAILED DESCRIPTION OF THE INVENTION

In the following, a treatment method for a wooden material according to one embodiment of this invention will be explained in detail.

The treatment method for a wooden material includes steps of subjecting the wooden material to bleaching treatment and to acetylating treatment, wherein the wooden material is subjected to the acetylating treatment after the bleaching treatment. When the wooden material is subjected to the bleaching treatment after the acetylating treatment, since the bleaching treatment is usually carried out under alkaline conditions, a portion of acetylated portions in the wooden material may be hydrolyzed by alkali, which may cause the loss of acetyl groups from the acetylated portions in the wooden material. Therefore, the wooden material is subjected to the acetylating treatment after the bleaching treatment.

Although the wooden material which may be used in this invention is not particularly restricted, specific examples of the wooden material include veneer produced by slicing wood, plywood such as orthogonal plywood (R/C), wood fiberboard such as medium density fiberboard (MDF), particle board, OSB, solid materials, materials combining thereof, a composite material including a veneer on which aluminum or the like is attached, and the like. The wood fiberboard and the particle board may be produced by subjecting wood fibers or wood particles to bleaching treatment and acetylating treatment, and then coating with binder resin. Among these wooden materials, when the veneer which is often used for a large area and in which yellowing portions tend to be prominent is used, the method according to this invention can be very effective.

As the bleaching treatment according to this invention, conventional bleaching methods may be used. For example, a bleaching solution is applied onto the wooden material by means of a brush coating method or the like, and then the wooden material is treated for a predetermined time, for example, by soaking the wooden material in a bleaching solution for a predetermined time, while heating it as necessary.

Specific examples of the bleaching solution include solutions (pH 9 to 12) such as a hydrogen peroxide solution; a solution including chlorite such as potassium chlorite, sodium chlorite, or the like; a solution including hypochlorite such as potassium hypochlorite, sodium hypochlorite, or the like.

Although the soaking time is not particularly restricted, the soaking time is preferably set to be from 10 to 200 minutes when the soaking temperature is set to be from 30 to 50°C, and the soaking time is preferably set to be from 1 to 24 hours when the soaking temperature is set to be 20°C, for example.

A conventional bleaching method such as a method of bleaching a wooden material with aliphatic dialdehyde and chlorite, which is disclosed in Japanese Unexamined Patent Application, First Publication No. Sho 57-187204, a method of soaking a wooden material in a mixed solution containing ascorbic acid, sodium hypochlorite, and sodium ethylenediaminetetraacetate, which is disclosed in Japanese Unexamined Patent Application, First Publication No. Sho 62-134202, a method of bleaching and decolorizing a wooden material with a hydrogen peroxide solution including a hydrogen peroxide derivative such as sodium percarbonate or the like, which is disclosed in Japanese Unexamined Patent Application, First Publication No. Hei 8-11106, or the like, may be used instead of the aforementioned bleaching treatment method.

After the bleaching treatment, the remaining bleaching solution is preferably removed by heating or washing the wooden material subjected to the bleaching treatment. In the case in which hydrogen peroxide contained in the bleaching solution remains in the wooden material, it may cause defects such as change in color of coating films or wood boards when the coating films are formed on the wooden material or when the wooden material is stained. The washing treatment is more preferable from the point of view of removing hydrogen peroxide remaining in the wooden material. The washing treatment is specifically conducted by soaking, in water, the wooden material subjected to the bleaching treatment, or by exposing the wooden material to flowing water. Warm or hot water at 40 to 80°C may be used for the washing. Although the washing time is not specifically restricted, the washing time is preferably set to be approximately 30 to 180 minutes.

After the aforementioned washing treatment, the wooden material subjected to the bleaching treatment is preferably dried. This is because the moisture content included in the wooden material and acetic anhydride of an acetylating agent are reacted with each other, which is an exothermic reaction, when acetylating treatment is carried out after the bleaching treatment. When a large amount of the wooden material is used, the degree of danger caused by the exothermic reaction is increased in addition to the change of color of the wooden material. Therefore, the moisture content in the wooden material is preferably set to be 13% by weight or less, more preferably 10% by weight or less, and even more preferably 3% by weight or less, relative to the total weight of the wooden material. When the aforementioned composite material is used as the wooden material, cracking of the wooden material can be inhibited by setting the moisture content to be 10% by weight or less.

As a method for drying, a hot air drying method, a vacuum drying method, a heating-panel drying method, or the like, may be employed. As drying conditions, the drying temperature is preferably set to be 40 to 80°C and the drying time is set to be 10 to 90 minutes in the case of the hot air drying method, the drying pressure is preferably set to be 5 to 120 Torr, the drying temperature is preferably set to be 40 to 80°C, and the drying time is preferably set to be 1 to 8 hours in the case of the vacuum drying method, and the drying temperature is preferably set to be 50 to 120°C and the drying time is preferably set to be 1 to 30 minutes in the case of the heating-panel drying method.

The acetylating treatment according to this invention means a treatment in which the wooden material is contacted with an acetylating agent such as acetic anhydride to substitute a portion of hydroxyl (OH) groups in the wooden material (W) with acetyloxy ($OCOCH_3$) groups as is shown by the following equation:

$$[W]\text{-}OH + (CH_3CO)_2O \rightarrow [W]\text{-}OCOCH_3 + CH_3COOH.$$

Although the acetylating treatment may be conducted in the vapor phase or the liquid phase, the acetylating treatment is preferably conducted in the vapor phase. This is because a large amount of the acetylating agent is required for carrying out the acetylating treatment in the liquid phase, and it is difficult to raise the temperature of a large amount of the acetylating agent to the reaction temperature in a short time.

As a specific method for the acetylating treatment in the vapor phase, a method may be cited in which the bottom portion of a reactor is filled with the acetylating agent, over which a supporting member consisting of a net made of stainless steel wire or the like is stretched, and the wooden material is then placed onto the net. Next, the wooden material and the gaseous vapor generated by heating the acetylating agent come into contact in the vapor phase, and the acetylating reaction is carried out as a result.

As the acetylating agent, acetic acid, acetic anhydride, chloroacetic acid, or the like may be employed. Among these, acetic anhydride is preferably used from the point of view of the reactivity (reactive efficiency).

Although the acetylating reaction is preferably carried out for approximately 15 minutes to 3 hours, the duration may be suitably adjusted according to the degree of acetylation required of the wooden material. The temperature of the gaseous vapor of the acetylating agent that is supplied to the acetylating reaction is preferably in the range of 130 to 200°C, and the reaction pressure is preferably set to be room pressure to 2 atmospheres.

The acetylating agent may be diluted with an inert solvent that does not react with the acetylating agent, such as xylene, and it may be employed as a mixed solution including the acetylating agent and the solvent. In this case, it is preferable to employ the aforementioned solvent in an amount that is 70% by weight or less with respect to the total weight of the mixed solution of the acetylating agent and the solvent. By employing this type of mixed solution in the process of acetylating the wooden material, the acetylating reaction, which is an exothermic reaction, can be proceeded in a moderate state. As a result, thermal deterioration or excessive acetylating of the wooden material can be limited, and the acetylating reaction can be carried out more easily.

The degree of acetylation of the wooden material subjected to the acetylating treatment is in the range of 1 to 25%, preferably 5% or more, by weight gain in the wooden material. This range may be suitably adjusted according to the resistance to moisture and humidity that is required for the wooden material. When the wooden material has been bleached for 10 minutes or more, the wooden material is preferably subjected to the acetylating treatment until the degree of acetylation is 5% or more by weight gain. Although effects of the acetylating treatment can be improved by increasing the degree of acetylation, it takes a long time for the acetylating treatment to increase the degree of acetylation. Therefore, the degree of acetylation may be 15% or less by weight gain to accomplish satisfactory effects in view of the time required for the acetylating treatment. However, when the time for the bleaching treatment is prolonged, the wooden material is preferably subjected to the acetylating treatment until the degree of acetylation is 15% or more by weight gain.

The wooden material subjected to the acetylating treatment is washed to remove the remained acetylating agent, as necessary. When the acetylating treatment is carried out in the liquid phase, or when the washing treatment is carried out after the acetylating treatment, the wooden material is dried so that the moisture content included in the wooden material is decreased to the predetermined level.

The wooden material subjected to the bleaching treatment and the acetylating treatment may be further subjected to aftertreatments such as coating treatments or the like, as necessary. Specific examples of resin used in the coating treatment include urethane resin, polyester resin, epoxy resin, acrylate resin, lacquer, alkyd resin, melamine resin, and the like. The resin is preferably a resin which does not cause significant change in the color of coating films.

According to the aforementioned treatment method for a wooden material, since both the bleaching treatment and the acetylating treatment are carried out, the problems in the bleaching treatment and in the acetylating treatment can be compensated for; that is, the decoloration and the coloration of the wooden material after the treatment, which are caused by exposure to light or heat, can be suppressed.

EXAMPLES

In the following, examples will be explained in order to further clarify the present invention. Each of these examples shows one embodiment of the present invention, and they are not intended to limit the present invention. Rather, these examples may be optionally changed, provided these changes remain within the scope of the invention.

Example 1

20 weight parts of a caustic soda solution was added into 100 weight parts of 35% by weight of a hydrogen peroxide solution to prepare a bleaching solution of which the pH was adjusted to 11. A veneer (60 cm wide, 30 cm long, 0.5 mm thick) made from maple and spruce was soaked into this bleaching solution at 40°C for 60 minutes. After the bleaching treatment, the veneer was pulled up, was soaked in hot water at 60°C for 10 minutes, and was then washed for 10 minutes by means of flowing water. Then, the washed veneer was dried for 5 minutes by leaving it on a heating-panel at 80°C, to adjust the moisture content included in the wooden material to 12% by weight.

The dried veneer was acetylated with acetic anhydride for 50 minutes at 150°C by using an apparatus for acetylating treatment in the vapor phase (manufactured by Sumitomo Chemical Engineering Co., Ltd.), and the unreacted acetic anhydride was then removed by evacuation. The degree of the acetylation of the veneer was 13% by weight gain.

The thus-obtained veneer was subjected to a radiationproofing test described below, so as to measure the degree of color difference before and after the test. Obtained results are shown in Table 1.

Radiationproofing Test

Each of the prepared wooden materials was continuously irradiated by using a xenon fade meter (color difference meter manufactured by SUGA TEST INSTRUMENT CO., LTD.) to measured values of $L^*$, $a^*$, and $b^*$ in a $L^*a^*b^*$ color specification system before and after the irradiation, from which each of the value differences, that is, $\Delta L^*$, $\Delta a^*$, and $\Delta b^*$, was respectively calculated, and the degree of color difference, that is, $\Delta E^*ab$ was then calculated according to the following equation:

$$\Delta E^*ab = [(\Delta L^*)^2 + (\Delta a^*)^2 + (\Delta b^*)^2]^{1/2}.$$

Test conditions
light source for measurement: D
integrating luminous energy: 11 MJ/m$^2$
temperature of black panel: 83°C

Comparative Example 1

A veneer (60 cm wide, 30 cm long, and 0.5 mm thick) made from maple was acetylated in the same manner as described in Example 1, and the unreacted acetic anhydride was then removed by evacuation. The degree of the acetylation of the veneer was 14% by weight gain.

The acetylated veneer was soaked at 40°C for 60 minutes in the same bleaching solution as described in Example 1. After the bleaching treatment, the veneer was pulled up, was soaked in hot water at 60°C for 10 minutes, and was then washed for 10 minutes by means of flowing water. Then, the washed veneer was dried for 5 minutes by leaving it on a heating-panel at 80°C.

The thus-obtained veneer was subjected to the radiationproofing test in the same way as described in Example 1, so as to measure the degree of color difference before and after the test. Obtained results are shown in Table 1.

Comparative Example 2

A veneer (60 cm wide, 30 cm long, and 0.5 mm thick) made from maple was soaked at 40°C for 60 minutes in the same bleaching solution as described in Example 1. After the bleaching treatment, the veneer was pulled out, was soaked in hot water at 60°C for 10 minutes, and was then washed for 10 minutes by means of flowing water. Then, the washed veneer was dried for 5 minutes by leaving it on a heating-panel at 80°C, to adjust the moisture content of the wooden material to 12% by weight.

The bleached veneer was subjected to the radiationproofing test in the same way as described in Example 1, so as to measure the degree of color difference before and after the test. Obtained results are shown in Table 1.

Comparative Example 3

A veneer (60 cm wide, 30 cm long, and 0.5 mm thick) made from maple and spruce was acetylated in the same manner as described in Example 1, and the unreacted acetic anhydride was then removed by evacuation. The degree of the acetylation of the veneer was 14% by weight gain.

The acetylated veneer was subjected to the radiationproofing test in the same way as described in Example 1, so as to measure the degree of color difference before and after the test. Obtained results are shown in Table 1.

Table 1

|  | Treatment | Degree of color difference ($\Delta E*ab$) |
|---|---|---|
| Example 1 | Bleaching→Acetylating | 4 |
| Comparative Example 1 | Acetylating→Bleaching | 7 |
| Comparative Example 2 | Bleaching | 15 |
| Comparative Example 3 | Acetylating | 10 |

Example 2

50 cc of 35% by weight of a hydrogen peroxide solution was added to 1 liter of 0.2 N sodium hydroxide to prepare a bleaching solution. A veneer (0.2 mm thick) made from maple was soaked in the bleaching solution at 40°C for 0, 5, 10, 20, 30, 60, or 120 minutes. After the bleaching treatment, the veneer was pulled out, was soaked in hot water at 72 to 80°C for 30 minutes, and was then washed for 10 minutes by means of flowing water. Then, the washed veneer was dried for 5 minutes by leaving it on a heating-panel at 80°C.

The dried veneer was acetylated with acetic anhydride for 60 minutes at 160°C by using an apparatus for acetylating treatment in the vapor phase, and the unreacted acetic anhydride was then removed by evacuation. The degree of the acetylation of the veneer was 5 to 15 % by weight gain.

When the veneer soaked in the bleaching solution for 120 minutes was subjected twice to the acetylating treatment, the degree of the acetylation of the veneer was 15 to 25% by weight gain.

The thus-obtained veneers were subjected to the radiationproofing test by using the xenon fade meter in the same manner described in Example 1, so as to measure the degree of color difference before and after the test. Obtained results are shown in Table 2.

Table 2

| Bleaching time (min) | Degree of color difference ($\Delta E*ab$) |
|---|---|
| 0 | Not Good (Only acetylating treatment was carried out) |
| 5 | Not Good |
| 10 | Good |
| 20 | Good |
| 30 | Good |
| 60 | Good |
| 120 | Good |
|  | Excellent (Acetylating treatment was carried out twice) |
| Not Good: The degree of color difference was 7 or more. Good: The degree of color difference was 4 to 7. Excellent: The degree of color difference was 4 or less. | |

Example 3

Veneers (0.2 mm thick) made from walnut subjected to the bleaching treatment and the acetylating treatment in the same way described in Example 2 were subjected to the radiationproofing test in the same manner described in Example 2, so as to measure the degree of color difference before and after the test. As a result of the measurement, the veneers subjected to the bleaching treatment for 60 minutes or more exhibited a degree of color difference of 7 or less, and the changes of color of the veneers caused by exposure to light were suppressed.

As described above, since the treatment method for a wooden material includes steps of subjecting the wooden material to the bleaching treatment and to the acetylating treatment, the change of color of the wooden material, which is caused by exposure to light or heat after the treatment, can be significantly suppressed.

When the acetylating treatment is carried out after the bleaching treatment, a portion of acetylated portions in the wooden material is inhibited from being hydrolyzed by the alkali in the bleaching treatment, and the treatment of the wooden material is effectively proceeded.

When the wooden material is washed between the bleaching treatment and the acetylating treatment, harmful effects on coating films or the like, which are caused by remaining hydrogen peroxide or the like, can be suppressed. When the wooden material is dried after washing, the wasteful consumption of the acetylating agent due to the moisture content remaining in the wooden material can be suppressed in the acetylating treatment.

**Claims**

1.   A treatment method for a wooden material, comprising steps of subjecting the wooden material to a bleaching treatment, and subjecting the wooden material to an acetylating treatment after the bleaching treatment, wherein the degree of acetylation of the wooden material subjected to the acetylating treatment is in the range of 1 to 25% by weight gain in the wooden material.

2.   A treatment method for a wooden material according to claim 1, wherein the wooden material is washed and is dried between the bleaching treatment and the acetylating treatment.

3.   A treatment method for a wooden material according to claim 1, wherein a bleaching solution for the bleaching treatment is selected from a hydrogen peroxide solution, a solution including chlorite, and a solution including hypochlorite, all of which are pH adjusted to 9 to 12.

4.   A treatment method for a wooden material according to claim 2, wherein the wooden material is washed and is dried until the moisture content in the wooden material is 13% by weight or less, relative to the total weight of the wooden material.

5.   A treatment method for a wooden material according to claim 1, wherein the bleaching treatment is carried out by immersing the wooden material into a bleaching solution and the acetylating treatment is carried out until the degree of the acetylation becomes 5% or more by weight gain.

6.   A treatment method for a wooden material according to claim 1, wherein the weight gain is 5% or more.

**Patentansprüche**

1.   Behandlungsverfahren für ein Holzmaterial, das die folgenden Schritte aufweist:

    Aussetzen des Holzmaterials einer Bleichbehandlung, und
    Aussetzen des Holzmaterials einer Acetylierungsbehandlung nach der Bleichbehandlung,

    wobei der Acetylierungsgrad des Holzmaterials, das der Acetylierungsbehandlung ausgesetzt wurde, im Bereich von 1 bis 25 Gewichtsprozent Zuwachs im Holzmaterial ist.

2.   Behandlungsverfahren für ein Holzmaterial gemäß Anspruch 1, wobei das Holzmaterial zwischen der Bleichbehandlung und der Acetylierungsbehandlung gewaschen und getrocknet wird.

3.   Behandlungsverfahren für ein Holzmaterial gemäß Anspruch 1, wobei eine Bleichlösung für das Bleichverfahren ausgewählt ist aus einer Wasserstoffperoxydlösung, einer Chlorit enthaltenden Lösung und einer Hypochlorit enthaltenden Lösung, deren pH-Werte auf 9 bis 12 eingestellt sind.

4.   Behandlungsverfahren für ein Holzmaterial gemäß Anspruch 2, wobei das Holzmaterial gewaschen und getrocknet wird, bis der Feuchtigkeitsgehalt in dem Holzmaterial 13 Gewichtsprozent oder weniger ist, und zwar bezogen auf das Gesamtgewicht des Holzmaterials.

5. Behandlungsverfahren für ein Holzmaterial gemäß Anspruch 1, wobei die Bleichbehandlung ausgeführt wird durch Eintauchen des Holzmaterials in einer Bleichlösung, und wobei die Acetylierungsbehandlung ausgeführt wird, bis der Acetylierungsgrad eine Zunahme von 5 Gewichtsprozent oder mehr wird.

6. Behandlungsverfahren für ein Holzmaterial gemäß Anspruch 1, wobei die Gewichtszunahme 5 % oder mehr ist.

**Revendications**

1. Procédé de traitement d'un élément en bois, comprenant des étapes consistant à soumettre l'élément en bois à un traitement de blanchiment et à soumettre l'élément en bois à un traitement d'acétylation, dans lequel le degré d'acétylation de l'élément en bois soumis au traitement d'acétylation et dans la plage de 1 à 25 % par gain en poids dans l'élément en bois.

2. Procédé de traitement d'un élément en bois selon la revendication 1, dans lequel l'élément en bois est lavé et séché entre le traitement de blanchiment et le traitement d'acétylation.

3. Procédé de traitement d'un élément en bois selon la revendication 1, dans lequel une solution de blanchiment pour le traitement de blanchiment est choisie parmi une solution de peroxyde d'hydrogène, une solution incluant un chlorite et une solution incluant un hypochlorite, toutes ayant un pH réglé entre 9 et 12.

4. Procédé de traitement d'un élément en bois selon la revendication 2, dans lequel l'élément en bois est lavé et séché jusqu'à ce que le contenu en humidité de l'élément en bois soit de 13 % en poids ou moins par rapport au poids total de l'élément en bois.

5. Procédé de traitement d'un élément en bois selon la revendication 1, dans lequel le traitement de blanchiment est effectué en immergeant l'élément en bois dans une solution de blanchiment et le traitement d'acétylation est effectué jusqu'à ce que le degré de l'acétylation devienne de 5 % ou plus par gain en poids.

6. Procédé de traitement d'un élément en bois selon la revendication 1, dans lequel le gain en poids est de 5 % ou plus.